# EUROPÄISCHE PATENTSCHRIFT

(11) **EP 0 938 236 B1**
(45) Veröffentlichungstag und Bekanntmachung des Hinweises auf die Patenterteilung: **08.11.2006**
(21) Anmeldenummer: 99440024.0
(22) Anmeldetag: 05.02.1999
(51) Int. Cl.: H04N 7/26, H04N 5/44

(54) **Verfahren zum Generieren einer Einsprungsstelle in einen Bildatenstrom und Vorrichtung zur Durchführung des Verfahrens**
Apparatus and method for generating entry points in an image data stream
Appareil et méthode pour la génération de points d'entrée dans un flux de données d'image

(30) Priorität: 19.02.1998 DE 19806913
(43) Veröffentlichungstag der Anmeldung: 25.08.1999
(73) Patentinhaber: ALCATEL, 75008 Paris (FR)
(72) Erfinder: Sauer, Peter, Dr., 71254 Ditzingen (DE)
(74) Vertreter: Menzietti, Domenico

(56) Entgegenhaltungen:
- EP-A- 0 656 729
- EP-A- 0 695 088
- EP-A- 0 762 770
- US-A- 5 602 592

## Beschreibung

Die Erfindung bezieht sich auf ein Verfahren zum Generieren einer Einsprungsstelle in einen Bilddatenstrom aus interframe-kodierten Bilddaten und eine Vorrichtung zur Durchführung des Verfahrens.

In Service-auf-Abruf Systemen, sogenannten Service-on-demand Systemen werden Echtzeitbilddaten in einem Server kodiert und Videobilddaten in einem Video-Server kodiert und gespeichert, um auf Abruf eines Kunden zum jeweiligen Kunden übertragen zu werden. Die Bildinformation der Echtzeitbilddaten und der Videobilddaten ist in Einzelbilder gegliedert, die aneinandergereit z.B. einen Mitschnitt einer Live-Sendung bzw. einen Videofilm ergeben.

Aufgrund der beschränkten Übertragungskapazität des Übertragungsmediums, z.B. eines Breitbandkabels, und vor allem der Kabel im Anschlußnetz wird zur Datenreduktion im Server/Video-Server eine Kompression der Echtzeit-/Videobilddaten durch Kodierung nach dem Interframe-Verfahren durchgeführt. Dazu werden nicht die Originaleinzelbilder, sondern lediglich die Differenzen der Bilddaten aufeinanderfolgender Einzelbilder kodiert. Ein Nachteil bei der Übertragung interframe-kodierter Bilddaten ist, daß kein Einsprung in einen kontinuierlichen Bilddatenstrom möglich ist, da dazu die Kenntnis des vorangegangenen Einzelbildes erforderlich wäre.

Aus DE 38 31 277 A1 ist bekannt, daß in den interframe-kodierten Bilddatenstrom von Zeit zu Zeit intraframe-kodierte Bilddaten eingefügt werden. Die Intraframe-Kodierung nutzt die Korrelation der Bilddaten innerhalb eines Einzelbildes aus. Es können somit intraframe-kodierte Einzelbilder als Einsprungstellen verwendet werden, da für diese keine Information vorangegangener Einzelbilder erforderlich ist. Die Datenrate von intraframe-kodierten Bilddaten ist aber wesentlich höher als die Datenrate von von interframe-kodierten Bilddaten. Ein Nachteil dieses Verfahrens ist daher, daß beim Übertragen eines Videofilms eine erhöhte Übertragungskapazität benötigt wird.

Aufgabe der Erfindung ist es, ein Verfahren und eine Vorrichtung zur Durchführung des Verfahrens zu schaffen, die geeignet sind, einen Einsprung in einen Bilddatenstrom zu ermöglichen, der, bis auf das Anfangsbild, ausschließlich aus interframe-kodierten Bilddaten aufgebaut ist.

Das Dokument US-A-5 602 592 offenbart ein Verfahren zum Generieren einer Einsprungsstelle in einen Bilddatenstrom aus interframe-kodierten Bilddaten mit den folgenden Schritten: Empfang von interframe-kodierten Bilddaten sowie Dekodieren des jeweils zuletzt empfangenen Einzelbildes, Empfang einer Anforderung ("Changeover signal") zum Generieren einer Einsprungstelle, und Kodieren des nächsten Einzelbildes nach dem Intraframe-Verfahren bei gleichzeitigem Zeitverzögern aller dem nächsten Einzelbild folgenden Bildern um einen vorbestimmten Wert. Ein Nachteil dieses Verfahren ist daher, dass die (Intraframe) Wiederkodierungsvorgänge eine höhere Komplexität verursachen. Weiterhin, realisiert dieses Verfahren ein Umschaltvorgang eines einzelnen Teilnehmers zwischen mehreren Kanälen.

Das efindungsgemässe Verfahren zielt ab auf das Zuschalten mehrerer Teilnehmer zu einem einzigen Kanal mit einer reduzierten Datenverarbeitungsanforderung ohne den Bilddatenstrom beim Generieren von mehreren Einsprungstellen zu beeinflussen.

Gelöst wird diese Aufgabe durch ein Verfahren nach Patentanspruch 1 und eine Vorrichtung nach Patentanspruch 3.

Im folgenden werden zwei Ausführungsbeispiele der Erfndung unter Zuhilfenahme von drei Figuren erläutert. Es zeigen :
- Fig. 1: eine schematische Darstellung einer ersten erfindungsgemäßen Vorrichtung,
- Fig. 2: zwei Diagramme beinhaltend einen interframe-kodierten Datenstrom und zwei Einsprungstellen, und
- Fig. 3: eine schematische Darstellung einer zweiten erfindungsgemäßen Vorrichtung

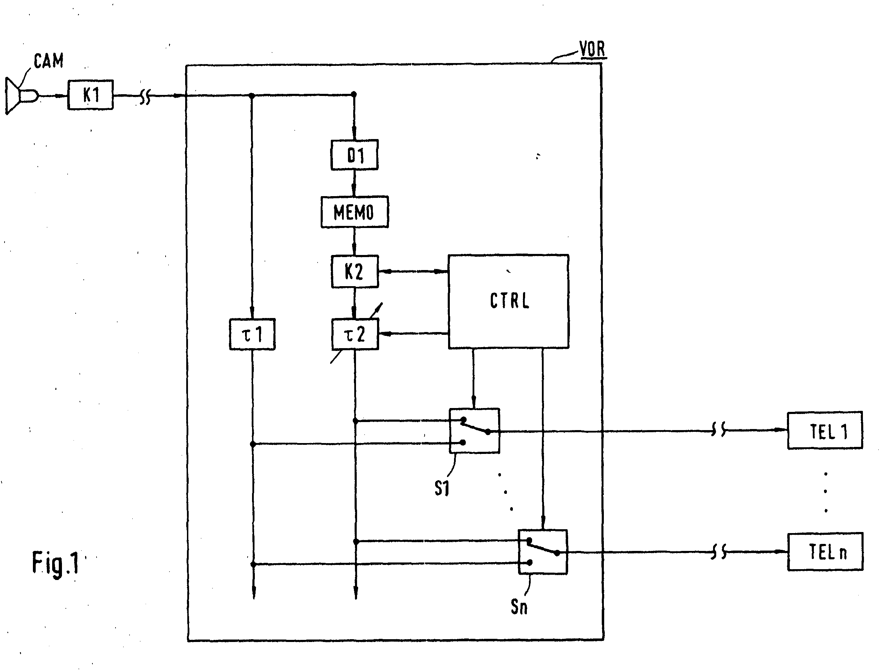

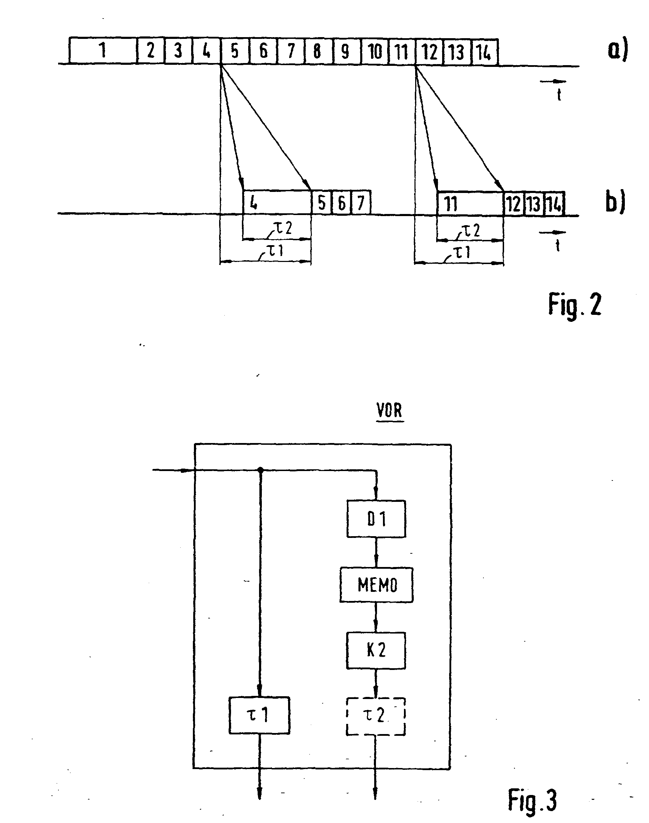

Das erste Ausführungsbeispiel wird nun unter Zuhilfenahme der Fig. 1 und 2 erläutert. Fig. 1 zeigt eine erste erfindungsgemäße Vorrichtung VOR zum Generieren einer oder mehrerer Einsprungsstellen in einen Bilddatenstrom aus interframe-kodierten Bilddaten.

Die Vorrichtung VOR dient insbesondere dazu, Echtzeitbilddaten, die beispielsweise über eine Kamera CAM und einen Kodierer K1 aufgenommen und kodiert werden, zu empfangen und zu beliebigen, von Teilnehmern zu bestimmenden Zeitpunkten zu z.B. mehreren Bildtelefonen TEL1, ..., TELn der Teilnehmer weiterzuleiten; n = eine natürliche Zahl, z.B. 20.

Die Kamera CAM nimmt z.B. eine Live-Sendung auf und führt die Bilddaten anschließend dem Kodierer K1 zu. Im Kodierer K1 wird das Anfangsbild nach dem Introframe-Verfohren kodiert und alle dem Anfangsbild folgenden Bilder noch dem Interfrome-Verfohren kodiert, um die erforderliche Übertragungskapazität zu minimieren. Ein solcher Kodierer ist beispielsweise aus DE 3613343 bekannt, wo er als Hybrid-Codierer bezeichnet ist. Die kodierten Bilddaten werden anschließend der Vorrichtung VOR zugeführt. Der Kodierer K1 und die Vorrichtung VOR können z.B. in einem Gehäuse angeordnet sein, z.B. beim Server, oder über ein Übertragungsnetz, wie z.B. dem ISDN oder dem B-ISDN oder über Funk miteinander in Verbindung stehen; ISDN = Diensteintegrierendes digitales Netz, B-ISDN = Breitband ISDN. Die Vorrichtung VOR und die Bildtelefone TEL1 bis TELn stehen z.B. über ein Übertragungsnetz, wie z.B. ISDN oder B-ISDN oder über Funk miteinander in Verbindung.

Die Vorrichtung VOR beinhaltet ein Zeitverzögerungsglied τ1 zum zeitlichen Verzögern von vom Kodierer K1 ausgesendeten und in der Vorrichtung VOR empfangenen intra- und interframe-kodierten Bilddaten um einen festen Wert, z.B. einige Milisekunden. Die Verzögerung des Zeitverzögerungsglieds τ1 wird benötigt, um Teilnehmern, die die Live-Sendung verfolgen möchten, Einsprungstellen zu generieren. Den Teilnehmern wird die Live-Sendung um den festen Wert verzögert angeboten, was allerdings kein Nachteil ist, da die Verzögerung derart gering ist, daß sie vom menschlichen Auge aufgrund seiner Trägheit nicht wahrnehmbar ist.

Die Vorrichtung VOR beinhaltet des weiteren eine Reihenschaltung aus einem Dekodierer D1, einem Zwischenspeicher MEMO, einem Kodierer K2 und einem Zeitverzögerungsglied τ2 zur Generierung der Einsprungstellen.

Der Dekodierer D1 dient zum Dekodieren mindestens eines intraframe-kodierten Bildes, z.B. dem Anfangsbild einer Live-Sendung und von interframe-kodierten Bilder, z.B. den dem Anfangsbild sequentiell folgenden Einzelbildern. Aufgrund des Empfangs des intraframe-kodierten Anfangsbildes können auch alle weiteren Einzelbilder dekodiert werden, obwohl diese interframe-kodiert sind, da alle vorangegangenen Bilder bekannt sind.

In dem Zwischenspeicher MEMO, z.B. ein Schreib-/Lesespeicher, werden die dekodierten Bilder zwischengespeichert.

Dekodierer D1 und Zwischenspeicher MEMO bilden z.B. Teile eines Bildtelefons, das eine Verbindung zur Kamera CAM und zum Kodierer K1 aufbaut.

Der Kodierer K2 dient zum Kodieren von zwischengespeicherten Bildern nach dem Intraframe-Verfahren. Der Aufbau des Kodierers K2 kann ganz oder teilweise dem Aufbau des Kodierers K1 entsprechen. Im Kodierer K2 werden die Einsprungstellen generiert. Im Zwischenspeicher MEMO liegen Bilddaten vor, die vergleichbar den Bilddaten sind, die der Kamera CAM vorliegen. Der Kodierer K2 kann somit auf die gleiche Art und Weise wie der Kodierer K1 intraframe-kodierte Bilddaten generieren, ohne daß Informationen über vorangegangene Bilder benötigt werden.

Das Zeitverzögerungsglied τ2 dient zum zeitlichen Verzögern der im Kodierer generierten intraframe-kodierten Bilder, wobei die zeitliche Verzögerung des Zeitverzögerungsglieds τ2 kleiner ist als die zeitliche Verzögerung des Zeitverzögerungsglieds τ1.

Die Vorrichtung VOR beinhaltet des weiteren eine Steuereinheit CTRL, die z.B. aus einem Mikroprozessor aufgebaut ist, der z.B. auch Teil eines Bildtelefons ist. Die Steuereinheit CTRL ist vorgesehen, um den Kodierer K2 und das Zeitverzögerungsglied τ2 anzusteuern.

Die Steuereinheit CTRL wird derart programmiert, daß sie den Kodierer K2 derart steuert, daß der Kodierer K2 zu von der Steuereinheit CTRL definierten Zeitpunkten ein zwischengespeichertes Bild nach dem lntraframe-Verfahren kodiert. Der Kodierer K2 ist beispielsweise in einem inaktiven Zustand, in dem er keine Kodierungen vornimmt. Er wird erst durch die Ansteuerung der Steuereinheit CTRL, die z.B. von einem Teilnehmer zum Einsprung und zur Übertragung einer Live-Sendung aufgefordert wurde, in den aktiven Zustand versetzt, in dem der Kodierer K2 eine Kodierung des aktuellsten zwischengespeicherten Einzelbildes nach dem Intraframe-Verfahren vornimmt. Dieses intraframe-kodierte Einzelbild dient dann als Einsprungstelle für die Übertragung der Live-Sendung zum Teilnehmer. An die Übertragung der Einsprungstelle wird zeitlich angepaßt durch das Verzögerungsglied τ2 die Übertragung der dem Einzelbild der Einsprungstelle folgenden und im Interframe-Verfahren kodierten Einzelbilder angeschlossen, so daß sich ein kontinuierlicher Datenstrom ergibt.

Die zeitliche Verzögerung des Zeitverzögerungsglieds τ2 wird durch die Steuereinheit CTRL eingestellt, die vom Kodierer K2 eine Information darüber erhält, wieviel Kapazität das intraframe-kodierte Einzelbild der Einsprungstelle erfordert, woraus sich die Verzögerung für seine Übertragung berechnen läßt. Die zeitliche Verzögerung des Zeitverzögerungsglieds τ2 bestimmt sich aus der Differenz der zeitlichen Verzögerung des Zeitverzögerungsglieds τ1 zur Verzögerung, die für die Generierung des intraframe-kodierten Einzelbildes der Einsprungstelle erforderlich ist. Die Aussendung des intraframe-kodierten Einzelbildes der Einsprungsstelle und die Aussendung der dem intraframe-kodierten Einzelbild der Einsprungsstelle sequentiell folgenden interframe-Einzelbilder werden also zeitlich aneinander angepaßt, um den kontinuierlichen Datenstrom zu erzeugen.

Die Vorrichtung VOR beinhaltet des weiteren mindestens einen von der Steuereinheit CTRL ansteuerbaren Schalter S1, Sn, deren Anzahl n (= eine natürliche Zahl) auf die zu versorgende Anzahl von Teilnehmern abgestimmt ist, z.B. 64 Schalter für 1000 Teilnehmer zur Ermöglichung von 64 gleichzeitigen Übertragungen. Jeder Schalter S1, Sn hat zwei Eingänge und einen Ausgang. Bei jedem Schalter S1, Sn ist ein Eingang mit dem Ausgang des Zeitverzögerungsglieds τ1 und der andere Eingang mit dem Ausgang des Zeitverzögerungsglieds τ2 verbunden. Jeder Schalter S1, Sn ist durch die Steuereinheit CTRL derart ansteuerbar ist, daß an jedem Ausgang ein kontinuierlicher Bildatenstrom anliegt, wenn eine Anforderung eines Teilnehmers zur Übertragung z.B. einer Live-Sendung vorliegt und eine Einsprungstelle generiert wurde. Schalter S1 ist beispielsweise stets mit dem Zeitverzögerungsglied τ2 verbunden. Kommt eine Anforderung eines Teilnehmers zur Generierung einer Einsprungstelle und zur Übertragung einer Live-Sendung, so wird diese Einsprungstelle angewiesen durch die Steuereinheit CRTL durch den Kodierer K2 generiert und ausgesandt. Über das Zeitverzögerungsglieds τ2 gelangt die Einsprungstelle verzögert zu Schalter S1, von w aus sie zum Teilnehmer weitergeleitet wird. Der Schalter S1 wird nach der Aussendung der Einsprungstelle mit dem Zeitverzögerungsglieds τ1 verbunden, so daß sich die Übertragung der der Einsprungsstelle folgenden Bilder zum Teilnehmer anschließt. Bei Beendigung der Übertragung wird der Schalter S1 wieder mit dem Zeitverzögerungsglieds τ2 verbunden.

Im folgenden wird das Verfahren zum Generieren einer Einsprungsstelle in einen Bilddatenstrom aus interframe-kodierten Bilddaten erläutert. Das Verfahren führt folgende Schritte durch :
a) Empfang von intraframe-kodierten Bilddaten eines Anfangsbildes und Zwischenspeichern des Anfangsbildes,
b) Empfang von interframe-kodierten Bilddaten von dem Anfangsbild sequentiell folgenden Einzelbildern und Zwischenspeichern des jeweils zuletzt empfangenen Einzelbildes,
c) Empfang einer Anforderung zum Generieren einer Einsprungstelle,
d) Kodieren des nächsten zwischenzuspeichernden Einzelbildes nach dem Intraframe-Verfahren bei gleichzeitigem Zeitverzögern aller dem nächsten zwischenzuspeichernden Einzelbild folgenden Bildern um einen vorbestimmten Wert,
e) Zeitverzögern des intraframe-kodierten Einzelbildes derart, daß nach einer Aussendung des intraframe-kodierten Einzelbildes die Aussendung des dem intraframe-kodierten Einzelbild sequentiell folgenden interframe-Einzelbildes zeitlich angepaßt erfolgen kann.

Sollen von dem Verfahren mehr als eine Einsprungsstelle generiert werden, so brauchen für jede weitere Einsprungstelle nur die Schritte c) bis e) durchgeführt werden. Die Schritte a) und b) werden für jede Live-Sendung nur einmal ausgeführt, wobei Schritt b) zeitlich parallel zu den Schritten c) bis e), die mehrmals nacheinander durchgeführt werden können, ausgeführt wird. Für den Fall, daß zwei Teilnehmer gleichzeitig eine Übertragung anfordern, brauchen die Schritte c) bis e) nur einmal durchgeführt werden. Über zwei der Schalter S1 bis Sn kann eine gleichzeitige Zuweisung der kontinuierlichen Bilddatenströme über zwei separaten Übertragungleitungenzu zwei unabhängigen Teilnehmern erfolgen.

Fig. 2a zeigt ein Diagramm mit 14 Einzelbildern eines kontinuierlichen Bilddatenstroms. Einzelbild 1 ist das Anfangsbild, daß nach dem Intraframe-kodierten Verfahren kodiert ist. Die Einzelbilder 2 bis 14 sind nach dem Interframe-Verfahren kodiert. Für jedes der Einzelbilder 2 bis 14 wird weniger Übertragungskapazität benötigt, wie für das Einzelbild 1. Auf der t-Achse ist die Übertragungszeit aufgetragen.

Fig. 2b zeigt zwei Einsprungstellen in den Bilddatenstrom aus Fig. 2a. Aus dem interframe-kodierten Einzelbild 4 wird nach Dekodierung durch Dekodierer D1 und Zwischenspeicherung im Zwischenspeicher MEMO ein Intraframe-kodiertes Einzelbild im Kodierer K2 generiert, das als Einsprungstelle dient. Die Verzögerung des Zeitverzögerungsglieds τ2 wird so gewählt, daß bei der Aussendung des intraframe-kodierten Einzelbildes 4 sich die Aussendung des um die Verzögerung des Zeitverzögerungsglieds τ1 verzögerten Einzelbildes 5 ohne Unterbrechung anschließt, so daß ein kontinuierlicher Bilddatenstrom entsteht. Auf eine weitere Anforderung eines Teilnehmers wird aus dem interframe-kodierten Einzelbild 11 ein intraframe-kodiertes Einzelbild 11 generiert, das als weitere Einsprungstelle dient. Die Verzögerung des Zeitverzögerungsglieds τ2 wird so gewählt, daß bei der Aussendung des intraframe-kodierten Einzelbildes 11 sich die Aussendung des um die Verzögerung des Zeitverzögerungsglieds τ1 verzögerten Einzelbildes 12 ohne Unterbrechung anschließt.

Das zweite Ausführungsbeispiel wird nun unter Zuhilfenahme der Fig. 3 erläutert. Fig. 3 zeigt eine zweite erfindungsgemäße Vorrichtung VOR zum Generieren mehrerer Einsprungsstellen in einen Bilddatenstrom aus interframe-kodierten Bilddaten. Die Vorrichtung VOR beinhaltet ein Zeitverzögerungsglied τ1 und eine Reihenschaltung aus einem Dekodierer D1, einem Zwischenspeicher MEMO, einem Kodierer K2 und einem Zeitverzögerungsglied τ2. Diese Baugruppen entsprechen den gleichnamigem Baugruppen aus Fig. 1 in ihrem Aufbau und ihrer Funktionsweise mit dem Unterschied, daß der Kodierer K2 und das Zeitverzögerungsglied τ2 nicht von einer Steuereinheit CTRL angesteuert werden, sondern zu fest definierten Zeitpunkten, z.B. in äquidistanten zeitlichen Abständen, ein zwischengespeichertes Bild nach dem Intraframe-Verfahren kodieren und angepaßt an die Verzögerung des Zeitverzögerungsglieds τ1 aussenden. Die intraframe-kodierten Bilder dienen als mögliche Einsprungstellen. Sie werden zeitlich parallel zu dem kontinuierlichen Bilddatenstrom übertragen, z.B. über zwei separate Übertrogungskanöle des ISDN oder im Zeitmultiplex über einen Kanal. Der Empfänger hat dann die Möglichkeit zu den möglichen Einsprungstellen in den kontinuierlichen Bilddatenstrom einzuspringen. Anstelle einer angepaßten Aussendung von möglichen Einsprungstellen und dem kontinuierlichen Bilddatenstrom kann auch auf das Zeitverzögerungsglied τ2 verzichtet werden. Der Empfänger hat dann dafür Sorge zu tragen, daß eine angepaßtes Einspringen in den Bilddatenstrom erfolgt. Dies ist z.B. bei Übertragungsstrecken sinnvoll, wo von vorneherein Laufzeitunterschiede für z.B. über zwei separate Übertragungskanäle des ISDN übertragene Daten nicht ausgeschlossen werden können, so daß die Anpassung der möglichen Einsprungstellen zum kontinuierlichen Bilddatenstrom bei der Übertragung in unvorhersehbarer Weise verändert werden könnte.

Bei beiden Ausführungsbeispielen ist aus Gründen der Übersichtlichkeit nicht auf zusätzliche Baugruppen, wie z.B. Signalisierungseinheiten zum Auf- und Abbau der Verbindungen, Verstärker, Entzerrer, Echo-Canceller sowie deren Aufbau und Funktionsweise eingegangen worden. Die Auswahl und die Anordnung dieser Baugruppen sind dem Fachmann nahegelegt.

## Patentansprüche

1. Verfahren zum Generieren einer Einsprungsstelle in einen Bilddatenstrom aus interframe-kodierten Bilddaten mit den folgenden Schritten:
a) Empfang von intraframe-kodierten Bilddaten eines Anfangsbildes sowie Dekodieren und Zwischenspeichern des dekodierten Anfangsbildes,
b) Empfang von interframe-kodierten Bilddaten von dem Anfangsbild sequentiell folgenden Einzelbildern sowie Dekodieren und Zwischenspeichern des jeweils zuletzt empfangenen dekodierten Einzelbildes,
c) Empfang einer Anforderung zum Generieren einer Einsprungstelle,
d) Kodieren des der Anforderung zum Generieren einer Einsprungstelle nächstfolgende zwischenzuspeichernden Einzelbildes nach dem intraframe-Verfahren bei gleichzeitigem Zeitverzögern aller dem nächsten zwischenzuspeichernden Einzelbild folgenden Bildern um einen vorbestimmten Wert,
e) Zeitverzögern des intraframe-kodierten Einzelbildes derart, daß nach einer Aussendung des intraframe-kodierten Einzelbildes die Aussendung des dem intraframe-kodierten Einzelbild sequentiell folgenden interframe-kodierten Einzelbildes zeitlich angepaßt erfolgen kann.

2. Verfahren zum Generieren von Einsprungsstellen in einen Bilddatenstrom aus interframe-kodierten Bilddaten mit den Schritten a) bis e) nach Anspruch 1, **dadurch gekennzeichnet, daß** für jede weitere Einsprungstelle die Schritte c) bis e) durchgeführt werden.

3. Vorrichtung (VOR) zur Durchführung des Verfahrens nach Anspruch 1 oder 2, beinhaltend : ein erstes Zeitverzögerungsglied (τ1) zum zeitlichen Verzögern von empfangenen intra- und interframe-kodierten Bilddaten um einen festen Wert, einen Dekodierer (D1) zum Dekodieren mindestens eines intraframe-kodierten Bildes und von interframe-kodierten Bilder, einem dem Dekodierer (D1) nachgeschalteten Zwischenspeicher (MEMO) zum Zwischenspeichern der dekodierten Bilder, einem dem Zwischenspeicher (MEMO) nachgeschalteten Kodierer (K2) zum Kodieren mindestens eines zwischengespeicherten Bildes nach dem Intraframe-Verfahren, und einem dem Kodierer (K2) nachgeschalteten zweiten Zeitverzögerungsglied (τ2) zum zeitlichen Verzögern des mindestens einem interframe-kodierten Bildes, wobei die zeitliche Verzögerung des zweiten Zeitverzögerungsglieds (τ2) kleiner ist als die zeitliche Verzögerung des ersten Zeitverzögerungsglieds (τ1).

4. Vorrichtung (VOR) nach Anspruch 3, **dadurch gekennzeichnet, daß** eine Steuereinheit (CTRL) vorgesehen ist, die geeignet ist, den Kodierer (K2) derart anzusteuern, daß der Kodierer (K2) zu einem von der Steuereinheit (CTRL) definierten Zeitpunkt ein zwischengespeichertes Bild nach dem Intraframe-Verfahren kodiert.

5. Vorrichtung (VOR) nach Anspruch 4, **dadurch gekennzeichnet, daß** die Steuereinheit (CTRL) geeignet ist, die zeitliche Verzögerung des zweiten Zeitverzögerungsglieds (τ2) einzustellen, um die Aussendung des intraframe-kodierten Einzelbildes und die Aussendung des dem intraframe-kodierten Einzelbild sequentiell folgenden interframe-kodierten Einzelbildes zeitlich aneinander anzupassen.

6. Vorrichtung (VOR) nach Anspruch 5, **dadurch gekennzeichnet, daß** mindestens ein von der Steuereinheit (CTRL) ansteuerbarer Schalter (S1, Sn) vorgesehen ist, daß jeder Schalter (S1, Sn) zwei Eingänge und einen Ausgang aufweist, daß bei jedem Schalter (S1, Sn) ein Eingang mit dem Ausgang des ersten Zeitverzögerungsglieds (τ1), der andere Eingang mit dem Ausgang des zweiten Zeitverzögerungsglieds (τ2) verbunden ist, und daß jeder Schalter (S1, Sn) derart ansteuerbar ist, daß an jedem Ausgang ein kontinuierlicher Bildatenstrom anliegt.

7. Vorrichtung (VOR) nach Anspruch 3, **dadurch gekennzeichnet, daß** der Kodierer (K2) geeignet ist, zu fest definierten Zeitpunkten ein zwischengespeichertes Bild nach dem Intraframe-Verfahren zu kodieren.

## Revendications

1. Procédé pour générer un point d'entrée dans un flux de données d'image composé de données d'image à codage intertrame comprenant les étapes suivantes :
a) Réception des données d'image à codage intratrame d'une image initiale, puis décodage et stockage temporaire de l'image initiale décodée,
b) Réception des données d'image à codage intertrame des images individuelles qui suivent séquentiellement l'image initiale, puis décodage et stockage temporaire de l'image individuelle à chaque fois reçue en dernier,
c) Réception d'une demande de génération d'un point d'entrée,
d) Codage de la prochaine image individuelle à stocker temporairement qui suit la demande de génération d'un point d'entrée selon le procédé intratrame avec retard simultané d'une valeur prédéfinie de toutes les images individuelles qui suivent l'image individuelle à stocker temporairement,
e) Retard de l'image individuelle à, codage intratrame de telle sorte que l'émission de l'image individuelle à codage intertrame qui suit séquentiellement l'image individuelle à codage intratrame puisse avoir lieu en étant adaptée dans le temps après une émission de l'image individuelle à codage intratrame.

2. Procédé pour générer un point d'entrée dans un flux de données d'image composé de données d'image à codage intertrame comprenant les étapes a) à e) selon la revendication 1, **caractérisé en ce que** les étapes c) à c) sont exécutées pour chaque point d'entrée supplémentaire.

3. Dispositif (VOR) pour mettre en oeuvre le procédé selon la revendication 1 ou 2, comprenant : un élément à retard (t1) pour retarder les données d'image à codage intratrame ou intertrame reçues, un décodeur (D1) pour décoder au moins une image à codage intratrame et des images à codage intertrame, une mémoire intermédiaire (MEMO) branchée à la suite di décodeur (D1) pour le stockage temporaire des images décodées, un codeur (K2) branché à la suite de la mémoire intermédiaire (MEMO) pour coder au moins une image stockée temporairement selon le procédé intratrame, et un deuxième élément à retard (t2) branché à la suite du codeur (K2) pour retarder l'au moins une image à codage intratrame, le retard du deuxième élément à retard (t2) étant inférieur au retard du premier élément à retard (t1).

4. Dispositif (VOR) selon la revendication 3, **caractérisé en ce qu'**il est prévu une unité de commande (CTRL) qui est conçue pour commander le codeur (K2) de manière à ce que le codeur (K2) code selon le procédé intratrame une image stockée temporairement à un moment défini par l'unité de commande (CTRL).

5. Dispositif (VOR) selon la revendication 4, **caractérisé en ce que** l'unité de commande (CTRL) est conçue pour régler le retard du deuxième élément à retard (t2) afin d'adapter l'une à l'autre dans le temps l'émission de l'image individuelle à codage intratrame et l'émission de l'image individuelle à codage intertrame qui suit séquentiellement l'image individuelle à codage intratrame.

6. Dispositif (VOR) selon la revendication 5, **caractérisé en ce qu'**il est prévu au moins un commutateur (S1, Sn) pouvant être commandé par l'unité de commande (CTRL), que chaque commutateur (S1, Sn) présente deux entrées et une sortie, que sur chaque commutateur (S1, Sn), une entrée est reliée avec la sortie du premier élément à retard (t1) et l'autre entrée avec la sortie du deuxième élément à retard (t2) et que chaque commutateur (S1, Sn) peut être commandé de telle sorte qu'un flux continu de données d'image est présent sur chaque sortie.

7. Dispositif (VOR) selon la revendication 3, **caractérisé en ce que** le codeur (K2) est conçu pour coder selon le procédé intratrame et à des moments fixes une image stockée temporairement.

## Claims

1. Method for generating an entry point into an image data stream of interframe-coded image data, having the following steps:
a) receiving intraframe-coded image data of an initial image, and decoding and buffering the decoded initial image,
b) receiving interframe-coded image data of individual images sequentially following the initial image, and decoding and buffering the decoded individual image respectively received last,
c) receiving a request to generate an entry point,
d) encoding the next individual image to be buffered following the request to generate an entry point according to the intraframe method, and at the same time delaying all images following the next individual image to be buffered by a predetermined value,
e) delaying the intraframe-coded individual image so that the transmission of the interframe-coded individual image sequentially following the intraframe-coded individual image can take place in a temporally matched way after a transmission of the intraframe-coded individual image.

2. Method for generating an entry point into an image data stream of interframe-coded image data, having steps a) to e) according to Claim 1, **characterised in that** steps c) to e) are carried out for each further entry point.

3. Apparatus (VOR) for carrying out the method according to Claim 1 or 2, containing: a retardation element (τ1) for delaying received intra- and interframe-coded image data by a fixed value, a decoder (D1) for decoding at least one intraframe-coded image and interframe-coded images, a buffer memory (MEMO) downstream of the decoder (D1) for buffering the decoded images, an encoder (K2) downstream of the buffer memory (MEMO) for encoding at least one buffered image according to the intraframe method, and a second retardation element (τ2) downstream of the encoder (K2) for delaying the at least one interframe-coded image, the time delay by the second retardation element (τ2) being less than the time delay by the first retardation element (τ1).

4. Apparatus (VOR) according to Claim 3, **characterised in that** a control unit (CTRL) is provided, which is suitable for driving the encoder (K2) so that the encoder (K2) encodes a buffered image according to the intraframe method at a time defined by the control unit (CTRL).

5. Apparatus (VOR) according to Claim 4, **characterised in that** the control unit (CTRL) is suitable for adjusting the time delay of the second retardation element (τ2) so that the transmission of the intraframe-coded individual image and the transmission of the interframe-coded individual image sequentially following the intraframe-coded individual image are temporally matched to one another.

6. Apparatus (VOR) according to Claim 5, **characterised in that** at least one switch (S1, Sn) which can be driven by the control unit (CTRL) is provided, **in that** each switch (S1, Sn) has two inputs and one output, **in that** one input of each switch (S1, Sn) is connected to the output of the first retardation element (τ1) and the other input is connected to the output of the second retardation element (τ2), and **in that** each switch (S1, Sn) can be driven so that a continuous image data stream is available at each output.

7. Apparatus (VOR) according to Claim 3, **characterised in that** the encoder (K2) is suitable for encoding a buffered image according to the intraframe method at fixed times.
